# EUROPEAN PATENT APPLICATION

(11) **EP 4 742 213 A1**
(43) Date of publication of application: **13.05.2026**
(21) Application number: 25204200.7
(22) Date of filing: 24.09.2025
(51) Int. Cl.: G08G 1/16, B60W 30/095, B60W 50/14, H04W 4/46

(54) **VEHICLE DRIVING ASSISTANCE APPARATUS**

(30) Priority: 06.11.2024 JP 2024194629
(71) Applicant: Toyota Jidosha Kabushiki Kaisha, Toyota-shi, Aichi 471-8571 (JP)
(72) Inventor: AKIMOTO, Hiraku, TOYOTA-SHI, AICHI, 471-8571 (JP)
(74) Representative: Cabinet Beau de Loménie

(57) **Abstract**

A vehicle driving assistance apparatus (10) acquires an inter-vehicle distance between the host vehicle (100) and the other vehicle (402, 403) existing in a neighboring lane, or acquires an inter-vehicle time obtained by dividing the inter-vehicle distance by a relative speed of the host vehicle (100) with respect to the other vehicle (402, 403). The apparatus (10) performs driving assistance to notify an operator of the host vehicle (100) of the presence of the other vehicle (402, 403) when a target condition that the inter-vehicle distance or the inter-vehicle time is equal to or less than a predetermined distance or a predetermined time and the other vehicle (402, 403) is not detected by a surrounding detection device (50) is satisfied, and when the apparatus (10) detects the intention of the operator or an operation by the operator to cause the host vehicle (100) to enter the neighboring lane.

## Description

### BACKGROUND

### Field

The present invention relates to a vehicle driving assistance apparatus.

### Description of the related art

Japanese Patent Application Publication No. 2017-111732 discloses a vehicle driving assistance apparatus that issues an alert to a driver of a host vehicle when a turn signal is not activated and another vehicle traveling in a neighboring lane exists in the vicinity of the host vehicle in. Further, in this vehicle driving assistance apparatus, when the turn signal is activated, even if another vehicle traveling in the neighboring lane exists in the vicinity of the host vehicle, the alert is not issued.

In some cases, when the turn signal is activated and the host vehicle is about to enter the neighboring lane, the driver of the host vehicle does not recognize that another vehicle traveling in the neighboring lane exists in the vicinity of the host vehicle. In such a case, it is preferable to notify the driver of the host vehicle of the existence of the other vehicle. However, in the conventional vehicle driving assistance apparatus, when the turn signal is activated and the host vehicle is about to enter the neighboring lane, even if another vehicle traveling in the neighboring lane exists in the vicinity of the host vehicle, the alert is not issued. Therefore, appropriate notification regarding another vehicle traveling in the neighboring lane is not provided to the driver of the host vehicle.

On the other hand, in some cases, when the turn signal is activated and the host vehicle is about to enter the neighboring lane, the driver of the host vehicle recognizes that another vehicle traveling in the neighboring lane exists in the vicinity of the host vehicle. In such a case, if the existence of such another vehicle is notified to the driver of the host vehicle, the driver may feel bothered. In this case, the notification that concerns another vehicle traveling in the neighboring lane and is provided to the driver of the host vehicle is not appropriate.

Further, even when the driver of the host vehicle does not recognize the existence of another vehicle traveling in the neighboring lane, when the host vehicle enters the neighboring lane, the driver recognizes the existence of the other vehicle and has a temporal margin to avoid contact between the other vehicle and the host vehicle. In such a case, if the existence of the other vehicle is notified to the driver of the host vehicle, the driver may feel bothered. Also in this case, the notification that concerns another vehicle traveling in the neighboring lane and is provided to the driver of the host vehicle is not appropriate.

### SUMMARY

An object of the present invention is to provide a vehicle driving assistance apparatus that is capable of providing appropriate notification regarding another vehicle traveling in the neighboring lane to an operator of the host vehicle.

A vehicle driving assistance apparatus according to the present invention comprises an electronic control unit configured to perform driving assistance for a host vehicle based on position information of another vehicle included in wireless communication information transmitted from the other vehicle. The electronic control unit is configured to acquire, as an inter-vehicle distance, a distance between the host vehicle and the other vehicle existing in a neighboring lane neighboring a lane in which the host vehicle is traveling, based on the position information, or acquire the inter-vehicle distance and acquire, as an inter-vehicle time, a value obtained by dividing the inter-vehicle distance by a relative speed of the host vehicle with respect to the other vehicle, based on the position information. Furthermore, the electronic control unit is configured to perform the driving assistance to notify an operator of the host vehicle of the presence of the other vehicle in the neighboring lane when a target condition that the inter-vehicle distance is equal to or less than a predetermined distance or the inter-vehicle time is equal to or less than a predetermined time and the other vehicle is not detected by a surrounding detection device mounted on the host vehicle is satisfied, and when the electronic control unit detects the intention of the operator to cause the host vehicle to enter the neighboring lane or an operation by the operator to cause the host vehicle to enter the neighboring lane.

In particular, the electronic control unit is configured to perform the driving assistance to notify the operator of the host vehicle of the presence of the other vehicle in the neighboring lane when the target condition that the inter-vehicle time is equal to or less than the predetermined time and the other vehicle is not detected by the surrounding detection device is satisfied, and when the electronic control unit detects the intention of the operator to cause the host vehicle to enter the neighboring lane or the operation by the operator to cause the host vehicle to enter the neighboring lane.

According to the present invention, when the inter-vehicle time is longer than the predetermined time, no notification is made even if the operator of the host vehicle intends to cause the host vehicle to enter the neighboring lane. That is, even when the operator of the host vehicle causes the host vehicle to enter the neighboring lane, no notification is made in cases where the operator of the host vehicle has a temporal margin to avoid contact between the host vehicle and the other vehicle. Further, when the other vehicle is detected by the surrounding detection device, and thus, there is a high possibility that the operator of the host vehicle has recognized the presence of the other vehicle, no notification is made even if the operator of the host vehicle intends to cause the host vehicle to enter the neighboring lane. As described above, when the operator of the host vehicle has a temporal margin to avoid contact with the other vehicle or when the operator of the host vehicle has recognized the presence of the other vehicle, no notification is made. Therefore, unnecessary notifications can be suppressed, and as a result, annoyance to the operator of the host vehicle can be reduced. Accordingly, appropriate notifications regarding other vehicles traveling in the neighboring lane can be provided to the operator of the host vehicle.

Alternatively, in particular, the electronic control unit is configured to perform the driving assistance to notify the operator of the host vehicle of the presence of the other vehicle in the neighboring lane when the target condition that the inter-vehicle distance is equal to or less than the predetermined distance and the other vehicle is not detected by the surrounding detection device is satisfied, and when the electronic control unit detects the intention of the operator to cause the host vehicle to enter the neighboring lane or an operation by the operator to cause the host vehicle to enter the neighboring lane.

According to the present invention, when the inter-vehicle distance is longer than the predetermined distance, no notification is made even if the operator of the host vehicle intends to cause the host vehicle to enter the neighboring lane. That is, even when the operator of the host vehicle causes the host vehicle to enter the neighboring lane, no notification is made in cases where the operator of the host vehicle has a temporal margin to avoid contact between the host vehicle and the other vehicle. Further, when the other vehicle is detected by the surrounding detection device, and thus, there is a high possibility that the operator of the host vehicle has recognized the presence of the other vehicle, no notification is made even if the operator intends to cause the host vehicle to enter the neighboring lane. As described above, when the operator of the host vehicle has a temporal margin to avoid contact with the other vehicle or when the operator of the host vehicle has recognized the presence of the other vehicle, no notification is made. Therefore, unnecessary notifications can be suppressed, and as a result, annoyance to the operator of the host vehicle can be reduced. Accordingly, appropriate notifications regarding other vehicles traveling in the neighboring lane can be provided to the operator of the host vehicle.

According to an aspect of the present invention, the neighboring lane may be an oncoming lane neighboring the lane in which the host vehicle is traveling. In this aspect, the other vehicle may be an oncoming vehicle traveling in the oncoming lane.

According to this aspect of the present invention, appropriate notifications regarding the oncoming vehicles traveling in the neighboring lane can be provided to the operator of the host vehicle.

According to another aspect of the present invention, the target condition may include a condition that an obstacle is detected in front of the host vehicle in the lane in which the host vehicle is traveling, by the surrounding detection device.

When there is an obstacle in front of the host vehicle, there is a higher possibility that the operator of the host vehicle has not recognized another vehicle existing in the neighboring lane. According to this aspect of the present invention, when there is an obstacle in front of the host vehicle, the target condition is satisfied and the presence of the other vehicle is notified to the operator of the host vehicle. Therefore, more appropriate notifications regarding other vehicles traveling in the neighboring lane can be provided to the operator of the host vehicle.

According to further another aspect of the present invention, the wireless communication information may be information transmitted from a wireless communication terminal possessed by a driver riding in the other vehicle.

According to this aspect of the present invention, even if a wireless communication device for transmitting the wireless communication information is not mounted, if a driver riding in the other vehicle possesses a wireless communication terminal, the wireless communication terminal can be used to perform the notification.

According to further another aspect of the present invention, the electronic control unit may be configured to determine that it detects the intention of the operator to cause the host vehicle to enter the neighboring lane, when it detects activation of a turn signal device of the host vehicle indicating entry of the host vehicle into the neighboring lane. In this aspect, the electronic control unit may be configured to determine that it detects the operation by the operator to cause the host vehicle to enter the neighboring lane, when it detects an operation to a steering wheel of the host vehicle for causing the host vehicle to enter the neighboring lane.

According to this aspect of the present invention, it is possible to determine that the operator of the host vehicle has an intention to cause the host vehicle to enter the neighboring lane by utilizing the activation of the turn signal device of the host vehicle, and it is also possible to determine that the operation by the operator to cause the host vehicle to enter the neighboring lane is performed by utilizing the steering wheel operation of the host vehicle.

Elements of the invention are not limited to elements of embodiments and modified examples of the invention described with reference to the drawings. The other objects, features and accompanied advantages of the invention can be easily understood from the embodiments and the modified examples of the invention.

### BRIEF DESCRIPTION OF THE DRAWINGS

FIG. 1 is a view showing a vehicle driving assistance apparatus according to an embodiment of the present invention.
FIG. 2 is a view showing a communication network.
FIG. 3 is a view showing a situation in which an oncoming vehicle traveling on a curved road is approaching a host vehicle.
FIG. 4 is a view showing a situation in which an oncoming vehicle traveling on a straight road is approaching the host vehicle.
FIG. 5 is a view showing a situation in which a parallel-traveling vehicle exists at a front-right diagonal position relative to a preceding vehicle.
FIG. 6 is a flowchart showing a routine executed by the vehicle driving assistance apparatus according to the embodiment of the present invention.

### DETAILED DESCRIPTION

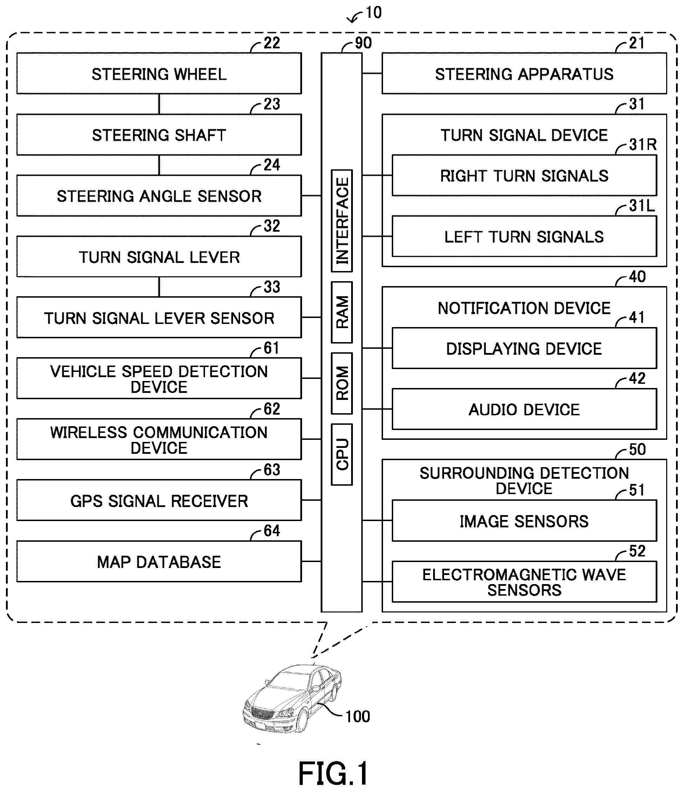

Hereinafter, a vehicle driving assistance apparatus according to an embodiment of the present invention will be described with reference to the drawings. FIG. 1 shows the vehicle driving assistance apparatus 10 according to the embodiment of the present invention. The vehicle driving assistance apparatus 10 is mounted on a host vehicle 100. Hereinafter, the vehicle driving assistance apparatus 10 will be described with an example in which an operator of the host vehicle 100 is a driver of the host vehicle 100 (that is, a person who boards the host vehicle 100 and drives the host vehicle 100).

However, the operator of the host vehicle 100 may be a remote operator of the host vehicle 100 (that is, a person who does not board the host vehicle 100 and drives the host vehicle 100 remotely). In the case where the operator of the host vehicle 100 is the remote operator, the vehicle driving assistance apparatus 10 is mounted on the host vehicle 100 and on a remote operation facility installed outside the host vehicle 100 to remotely drive the host vehicle 100, and the functions of the vehicle driving assistance apparatus 10, which will be described below, are performed in a shared manner by the vehicle driving assistance apparatus 10 mounted on the host vehicle 100 and the vehicle driving assistance apparatus 10 mounted on the remote operation facility.

As shown in FIG. 1, the vehicle driving assistance apparatus 10 includes an ECU (or electronic control unit) 90 as a control device. The ECU 90 includes a microcomputer as a main component. The microcomputer includes a CPU, a computer-readable storage medium, and interfaces. The storage medium includes ROM, RAM, and non-volatile memory. The CPU executes instructions or programs or routines stored in the storage medium to implement various functions. In particular, in the present example, the vehicle driving assistance apparatus 10 stores, in the storage medium, programs that implement various controls executed by the vehicle driving assistance apparatus 10.

It should be noted that, in the present example, the vehicle driving assistance apparatus 10 includes only one ECU 90, but it may include a plurality of ECUs, and the functions of the vehicle driving assistance apparatus 10 described below may be performed in a shared manner by each ECU.

Further, the vehicle driving assistance apparatus 10 may be configured to update (or upgrade) the programs stored in the storage medium via wireless communication (for example, Internet communication) with external devices.

It should be noted that the vehicle driving assistance apparatus 10 is applicable not only to vehicles that are driven by manual operation by an operator, but also to vehicles that are driven by automatic driving.

The host vehicle 100 is equipped with a steering apparatus 21, a steering wheel 22, a steering shaft 23, and a steering angle sensor 24.

The steering apparatus 21 is an apparatus that applies a steering force to the host vehicle 100 to steer the host vehicle 100. The steering wheel 22 is a device operated by the driver to steer the host vehicle 100. The steering wheel 22 is connected to the steering shaft 23. The driver can rotate the steering shaft 23 by rotating the steering wheel 22. The steering angle sensor 24 is a sensor that detects a rotation angle of the steering shaft 23 from a neutral position.

The steering apparatus 21 and the steering angle sensor 24 are electrically connected to the ECU 90. The vehicle driving assistance apparatus 10 acquires the rotation angle of the steering shaft 23 as a steering angle θ by the steering angle sensor 24. Further, the vehicle driving assistance apparatus 10 steers the host vehicle 100 by controlling the steering apparatus 21 in accordance with the acquired steering angle θ.

Furthermore, the host vehicle 100 is equipped with a turn signal device 31, a turn signal lever 32, and a turn signal lever sensor 33.

The turn signal device 31 includes right turn signals 31R and left turn signals 31L. The right turn signal 31R is a device that blinks to notify people around the host vehicle 100 that the host vehicle 100 is moving to the right (in particular, turning right). The left turn signal 31L is a device that blinks to notify people around the host vehicle 100 that the host vehicle 100 is moving to the left (in particular, turning left).

The turn signal lever 32 is a device operated by the driver to activate the turn signal device 31. The turn signal lever sensor 33 is a sensor that detects an operation on the turn signal lever 32.

The right turn signals 31R, the left turn signals 31L, and the turn signal lever sensor 33 are electrically connected to the ECU 90. When the vehicle driving assistance apparatus 10 detects, by the turn signal lever sensor 33, that the turn signal lever 32 is operated in the clockwise direction, the vehicle driving assistance apparatus 10 blinks the right turn signals 31R. On the other hand, when the vehicle driving assistance apparatus 10 detects, by the turn signal lever sensor 33, that the turn signal lever 32 is operated in the counterclockwise direction, the vehicle driving assistance apparatus 10 blinks the left turn signals 31L.

Furthermore, the host vehicle 100 is equipped with a notification device 40. The notification device 40 includes a displaying device 41 and an audio device 42.

The displaying device 41 is a device that displays various images. The displaying device 41 includes, for example, a display. The displaying device 41 is electrically connected to the ECU 90. The vehicle driving assistance apparatus 10 displays various images by the displaying device 41.

The audio device 42 is a device that outputs various sounds and/or voices. The audio device 42 includes, for example, a speaker. The audio device 42 is electrically connected to the ECU 90. The vehicle driving assistance apparatus 10 outputs various sounds and/or voices by the audio device 42.

Furthermore, the host vehicle 100 is equipped, as in-vehicle devices, with a surrounding detection device 50, a vehicle speed detection device 61, a wireless communication device 62, a GPS signal receiver 63, and a map database 64.

The surrounding detection device 50 is a device that detects information on the surroundings of the host vehicle 100. In particular, in the present example, the surrounding detection device 50 is a device used to detect other vehicles. The surrounding detection device 50 includes a plurality of image sensors 51 and a plurality of electromagnetic wave sensors 52.

The image sensors 51 are devices that capture images of the surroundings of the host vehicle 100. The image sensors 51 are, for example, camera sensors. The image sensors 51 are electrically connected to the ECU 90. The vehicle driving assistance apparatus 10 acquires, by the image sensors 51, image data or image information on the surroundings of the host vehicle 100 as surrounding information IS.

The electromagnetic wave sensors 52 are devices that acquire information on objects around the host vehicle 100. The electromagnetic wave sensors 52 are, for example, millimeter wave radars. The electromagnetic wave sensors 52 are electrically connected to the ECU 90. The vehicle driving assistance apparatus 10 acquires, by the electromagnetic wave sensors 52, object data or object information on objects around the host vehicle 100 as surrounding information IS.

The vehicle speed detection device 61 is a device that detects a traveling speed of the host vehicle 100. The vehicle speed detection device 61 includes, for example, wheel rotation speed sensors provided on each wheel of the host vehicle 100. The vehicle speed detection device 61 is electrically connected to the ECU 90. The vehicle driving assistance apparatus 10 acquires the traveling speed of the host vehicle 100 as a host vehicle speed V1 by the vehicle speed detection device 61.

The wireless communication device 62 is a device that receives radio signals transmitted from other vehicles. In the present example, the radio signals are transmitted from wireless communication terminals 200 possessed by drivers riding in the other vehicles. The wireless communication terminal 200 is a terminal having a wireless communication function. The wireless communication terminal 200 is, for example, a so-called mobile phone.

The radio signal is a signal representing various information (or wireless communication information IW) including at least position information IP of the wireless communication terminal 200. The position information IP is information indicating the position of the wireless communication terminal 200.

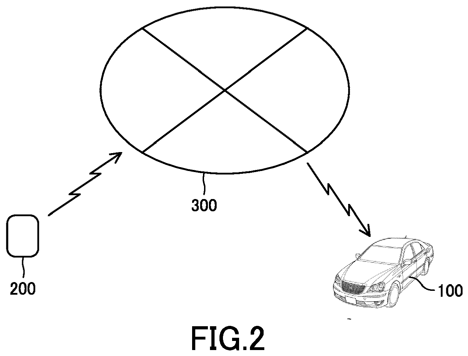

As shown in FIG. 2, the radio signal transmitted from the wireless communication terminal 200 arrives at the wireless communication device 62 of the vehicle driving assistance apparatus 10 via a communication network 300.

The wireless communication device 62 is electrically connected to the ECU 90. The vehicle driving assistance apparatus 10 receives the radio signals via the wireless communication device 62. The vehicle driving assistance apparatus 10 acquires the wireless communication information IW based on the radio signals.

It should be noted that, in the present example, the exchange of the wireless communication information between the other vehicle (more precisely, the wireless communication terminal 200 possessed by the driver riding in the other vehicle) and the vehicle driving assistance apparatus 10 is an exchange using a so-called V2N technology. Therefore, in the present example, the communication network 300 is an Internet communication network which is a part of the communication network infrastructure used in the V2N technology. However, the present invention is also applicable in cases where an infrastructure (or a facility) including a communication network used in a so-called V2X technology, including the V2N technology, is used.

Further, the radio signals may be signals transmitted from wireless communication devices mounted on the other vehicles.

The GPS signal receiver 63 is a device that receives so-called GPS signals. The GPS signal receiver 63 is electrically connected to the ECU 90. The vehicle driving assistance apparatus 10 receives the GPS signals via the GPS signal receiver 63. The vehicle driving assistance apparatus 10 acquires the current position of the host vehicle 100 based on the GPS signals.

The map database 64 is a device that stores map information IM. The map database 64 is electrically connected to the ECU 90.

### <Operation of Vehicle Driving Assistance Apparatus>

Next, the operation of the vehicle driving assistance apparatus 10 will be described.

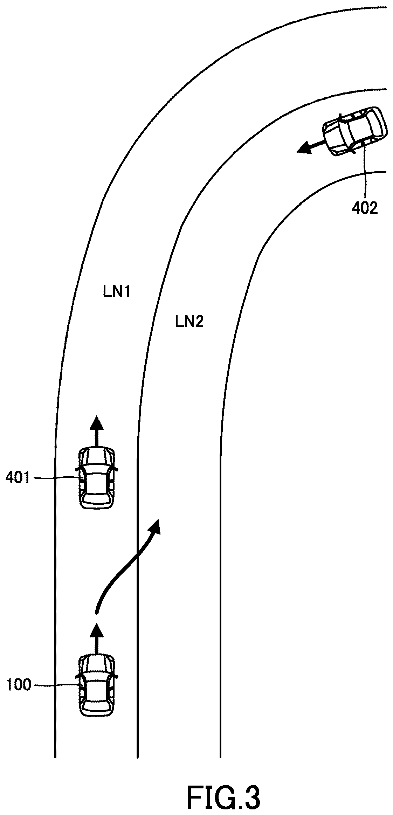

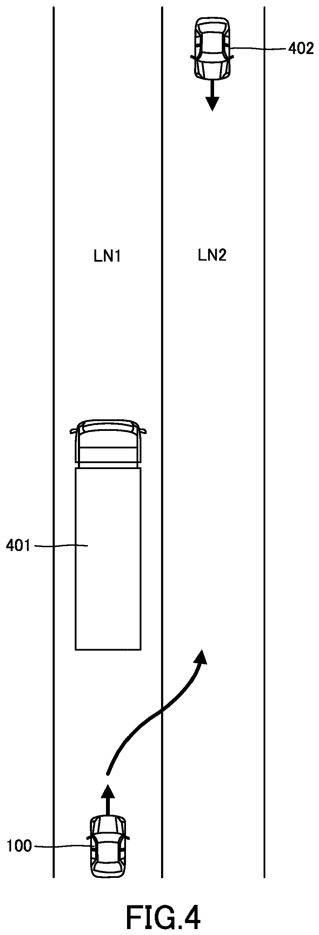

As shown in FIG. 3 and FIG. 4, when the host vehicle 100 attempts to enter an oncoming lane LN2 in order to overtake a preceding vehicle 401, there may be cases where an oncoming vehicle 402 is approaching the host vehicle 100. In such a case, as shown in FIG. 3, if the road ahead of the host vehicle 100 is a curved road and the oncoming vehicle 402 is present on that curved road, the driver of the host vehicle 100 may not be able to see the oncoming vehicle 402. Also, as shown in FIG. 4, even when the road ahead of the host vehicle 100 is a straight road and the oncoming vehicle 402 is present in the oncoming lane LN2 of that straight road, if a preceding vehicle 401 is present ahead of the host vehicle 100, the driver of the host vehicle 100 may not be able to see the oncoming vehicle 402. In particular, when the preceding vehicle 401 is a relatively large vehicle such as a large truck, the driver of the host vehicle 100 may not be able to see the oncoming vehicle 402. In such situations, it is preferable to notify the driver of the host vehicle 100 of the presence of the oncoming vehicle 402.

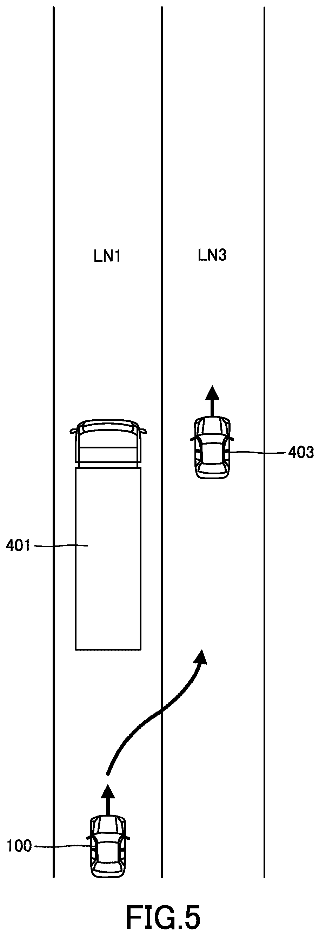

Further, as shown in FIG. 5, when the host vehicle 100 attempts to enter an adjacent lane LN3 in order to overtake the preceding vehicle 401, there may be cases where an adjacent traveling vehicle 403 is present diagonally ahead of the preceding vehicle 401. In such a case as well, the driver of the host vehicle 100 may not be able to see the adjacent traveling vehicle 403. In such situations, it is preferable to notify the driver of the host vehicle 100 of the presence of the adjacent traveling vehicle 403.

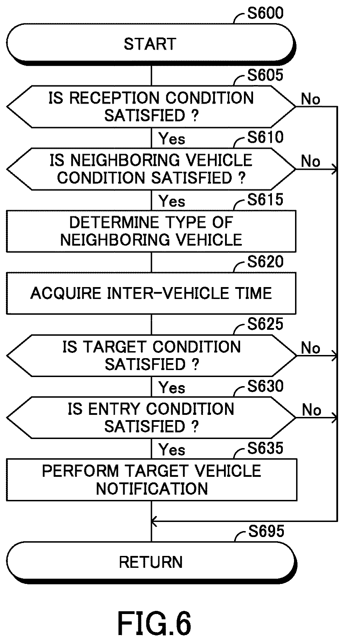

The vehicle driving assistance apparatus 10, by executing a routine shown in FIG. 6, notifies the driver of the host vehicle 100 of the presence of the above-described oncoming vehicle 402 or adjacent traveling vehicle 403 when a predetermined condition is satisfied.

The vehicle driving assistance apparatus 10 executes the routine shown in FIG. 6 at predetermined time intervals. Therefore, at a predetermined timing, the vehicle driving assistance apparatus 10 starts a process from a step S600 of the routine shown in FIG. 6 and proceeds with the process to a step S605 to determine whether a reception condition C1 is satisfied. The reception condition C1 is a condition that the wireless communication information IW is received.

When the reception condition C1 is satisfied, the vehicle driving assistance apparatus 10 determines "Yes" at the step S605 and proceeds with the process to a step S610 to determine whether a neighboring vehicle condition C2 is satisfied.

The neighboring vehicle condition C2 is a condition that an information-transmitting vehicle is a neighboring vehicle. The information-transmitting vehicle is another vehicle that transmits the wireless communication information IW received by the vehicle driving assistance apparatus 10. Further, the neighboring vehicle is a vehicle traveling on a neighboring lane and located ahead of the host vehicle 100 as viewed along a host lane LN1, and corresponds to the oncoming vehicle 402 or the adjacent traveling vehicle 403. The neighboring lane is the oncoming lane LN2 or the adjacent lane LN3 neighboring the host lane LN1. The host lane LN1 is the lane on which the host vehicle 100 is traveling.

The vehicle driving assistance apparatus 10 specifies the host lane LN1 by collating the current position of the host vehicle 100 with the map information IM. Further, the vehicle driving assistance apparatus 10 acquires the current position of the information-transmitting vehicle based on the position information IP included in the received wireless communication information IW, and determines whether the information-transmitting vehicle is a neighboring vehicle by collating the acquired current position with the map information IM.

When the neighboring vehicle condition C2 is satisfied, the vehicle driving assistance apparatus 10 determines "Yes" at the step S610 and proceeds with the process to a step S615 to determine the type of the neighboring vehicle. That is, the vehicle driving assistance apparatus 10 determines whether the neighboring vehicle is the oncoming vehicle 402 or the adjacent traveling vehicle 403. The vehicle driving assistance apparatus 10 determines, based on the map information IM, whether the neighboring lane on which the neighboring vehicle is traveling is the oncoming lane LN2 or the adjacent lane LN3, and based on the result of this determination, determines whether the neighboring vehicle is the oncoming vehicle 402 or the adjacent traveling vehicle 403.

Next, the vehicle driving assistance apparatus 10 proceeds with the process to a step S620 to acquire an inter-vehicle time TTC. The inter-vehicle time TTC is a time obtained by dividing an inter-vehicle distance D by a relative speed Vr.

The inter-vehicle distance D is the distance along the road on which the host vehicle 100 is traveling, between the host vehicle 100 and the neighboring vehicle. The vehicle driving assistance apparatus 10 acquires the inter-vehicle distance D based on the current position of the host vehicle 100 and the wireless communication information IW. More specifically, the vehicle driving assistance apparatus 10 acquires the current position of the neighboring vehicle based on the position information IP on the neighboring vehicle included in the wireless communication information IW, and acquires the inter-vehicle distance D based on the acquired current position and the current position of the host vehicle 100.

In this manner, the vehicle driving assistance apparatus 10 acquires, based on the position information IP, as the inter-vehicle distance D, the distance between the host vehicle 100 and another vehicle present on the neighboring lane neighboring the lane on which the host vehicle 100 is traveling.

The relative speed Vr is the relative speed between the host vehicle 100 and the neighboring vehicle. More specifically, when the neighboring vehicle is the oncoming vehicle 402, the relative speed Vr is the value obtained by adding a vehicle speed V2 of the oncoming vehicle 402 to the host vehicle speed V1 (Vr = V1 + V2). On the other hand, when the neighboring vehicle is the adjacent traveling vehicle 403, the relative speed Vr is the absolute value of the value obtained by subtracting a vehicle speed V3 of the adjacent traveling vehicle 403 from the host vehicle speed V1 (Vr = |V1 - V3|). The vehicle driving assistance apparatus 10 acquires the relative speed Vr based on the host vehicle speed V1 and the wireless communication information IW. More specifically, the vehicle driving assistance apparatus 10 acquires the vehicle speed V2 of the oncoming vehicle 402 or the vehicle speed V3 of the adjacent traveling vehicle 403 based on the position information IP included in the wireless communication information IW, and acquires the relative speed Vr based on the acquired vehicle speed V2 of the oncoming vehicle 402 or vehicle speed V3 of the adjacent traveling vehicle 403 and the host vehicle speed V1.

In this manner, the vehicle driving assistance apparatus 10 acquires, based on the position information IP, as the inter-vehicle time TTC, a value obtained by dividing the inter-vehicle distance D by the relative speed Vr with respect to another vehicle.

Next, the vehicle driving assistance apparatus 10 proceeds with the process to a step S625 to determine whether a target condition C3 is satisfied.

In the case where the neighboring vehicle is the oncoming vehicle 402, the target condition C3 is a condition that the inter-vehicle time TTC is equal to or less than a predetermined oncoming vehicle inter-vehicle time TTC2 (i.e., a predetermined inter-vehicle time set for the oncoming vehicle 402), and the oncoming vehicle 402 is not detected by the surrounding detection device 50. In other words, the target condition C3 is a condition that the inter-vehicle time TTC is equal to or less than the predetermined oncoming vehicle inter-vehicle time TTC2, and the vehicle driving assistance apparatus 10 does not detect the oncoming vehicle 402 based on the surrounding information IS.

On the other hand, in the case where the neighboring vehicle is the adjacent traveling vehicle 403, the target condition C3 is a condition that the inter-vehicle time TTC is equal to or less than a predetermined adjacent traveling vehicle inter-vehicle time TTC3 (i.e., a predetermined inter-vehicle time set for the adjacent traveling vehicle 403), and the adjacent traveling vehicle 403 is not detected by the surrounding detection device 50. In other words, the target condition C3 is a condition that the inter-vehicle time TTC is equal to or less than the predetermined adjacent traveling vehicle inter-vehicle time TTC3, and the vehicle driving assistance apparatus 10 does not detect the adjacent traveling vehicle 403 based on the surrounding information IS.

It should be noted that the predetermined oncoming vehicle inter-vehicle time TTC2 and the predetermined adjacent traveling vehicle inter-vehicle time TTC3 may be set to the same time or may be set to different times. When the predetermined oncoming vehicle inter-vehicle time TTC2 and the predetermined adjacent traveling vehicle inter-vehicle time TTC3 are set to different times, it is preferable that the predetermined oncoming vehicle inter-vehicle time TTC2 be set to a time longer than the predetermined adjacent traveling vehicle inter-vehicle time TTC3.

Further, the vehicle driving assistance apparatus 10 may be configured to determine, at the step S625, whether the target condition C3 is satisfied by acquiring only the inter-vehicle distance D without acquiring the inter-vehicle time TTC at the step S620, and by using the inter-vehicle distance D.

In this case, when the neighboring vehicle is the oncoming vehicle 402, the target condition C3 is a condition that the inter-vehicle distance D is equal to or less than a predetermined oncoming vehicle inter-vehicle distance D2 (i.e., a predetermined inter-vehicle distance set for the oncoming vehicle 402), and the oncoming vehicle 402 is not detected by the surrounding detection device 50. In other words, the target condition C3 is a condition that the inter-vehicle distance D is equal to or less than the predetermined oncoming vehicle inter-vehicle distance D2, and the vehicle driving assistance apparatus 10 does not detect the oncoming vehicle 402 based on the surrounding information IS.

On the other hand, when the neighboring vehicle is the adjacent traveling vehicle 403, the target condition C3 is a condition that the inter-vehicle distance D is equal to or less than a predetermined adjacent traveling vehicle inter-vehicle distance D3 (i.e., a predetermined inter-vehicle distance set for the adjacent traveling vehicle 403), and the adjacent traveling vehicle 403 is not detected by the surrounding detection device 50. In other words, the target condition C3 is a condition that the inter-vehicle distance D is equal to or less than the predetermined adjacent traveling vehicle inter-vehicle distance D3, and the vehicle driving assistance apparatus 10 does not detect the adjacent traveling vehicle 403 based on the surrounding information IS.

It should be noted that, in the present example, the predetermined adjacent traveling vehicle inter-vehicle distance D3 is set to a distance shorter than the predetermined oncoming vehicle inter-vehicle distance D2.

Alternatively, the target condition C3 may include, in addition to the above-described conditions, a condition that an obstacle is detected in the host lane LN1 ahead of the host vehicle 100 by the surrounding detection device 50. The obstacle here refers to a preceding vehicle 401, a fallen object, or a stopped vehicle that is present in the host lane LN1 ahead of the host vehicle 100. The preceding vehicle 401 is another vehicle traveling in the host lane LN1 immediately in front of the host vehicle 100. The vehicle driving assistance apparatus 10 detects the preceding vehicle 401 based on the surrounding information IS. The fallen object is a relatively large object that has fallen within the host lane LN1 ahead of the host vehicle 100. The relatively large object is, for example, a tire, a piece of lumber, or the like. The vehicle driving assistance apparatus 10 detects a fallen object in the host lane based on the surrounding information IS. The stopped vehicle is another vehicle stopped within the host lane LN1 ahead of the host vehicle 100. The vehicle driving assistance apparatus 10 detects a stopped vehicle in the host lane based on the surrounding information IS.

When the target condition C3 is satisfied, the vehicle driving assistance apparatus 10 determines "Yes" at the step S625 and proceeds with the process to a step S630 to determine whether an entry condition C4 is satisfied.

The entry condition C4 is a condition that the driver of the host vehicle 100 is attempting to cause the host vehicle 100 to enter the neighboring lane in which the neighboring vehicle is traveling. In other words, the entry condition C4 is a condition that the driver of the host vehicle 100 has an intention to cause the host vehicle 100 to enter a target neighboring lane (i.e., the neighboring lane in which the neighboring vehicle is traveling), or has performed an operation to cause the host vehicle 100 to enter the host vehicle 100 into the target neighboring lane.

In the present example, when the turn signal device 31 indicating a movement of the host vehicle 100 into the target neighboring lane is activated, the vehicle driving assistance apparatus 10 determines that the driver of the host vehicle 100 has the intention to cause the host vehicle 100 to enter the target neighboring lane. More specifically, when the target neighboring lane is a lane on the right side of the host lane LN1 and the right turn signals 31R are activated, the vehicle driving assistance apparatus 10 determines that the driver of the host vehicle 100 has the intention to cause the host vehicle to enter the target neighboring lane. On the other hand, when the target neighboring lane is a lane on the left side of the host lane LN1 and the left turn signals 31L are activated, the vehicle driving assistance apparatus 10 determines that the driver of the host vehicle 100 has the intention to cause the host vehicle 100 to enter the target neighboring lane.

Further, when the driver of the host vehicle 100 operates the steering wheel 22 in such a manner that the host vehicle 100 enters the target neighboring lane, the vehicle driving assistance apparatus 10 determines that the driver has performed an operation to cause the host vehicle 100 to enter the target neighboring lane. More specifically, when the steering angle θ reaches or exceeds a predetermined angle θth such that the host vehicle 100 will enter the target neighboring lane, the vehicle driving assistance apparatus 10 determines that the driver has performed the operation to cause the host vehicle 100 to enter the target neighboring lane.

As described above, the vehicle driving assistance apparatus 10 is configured to detect the driver's intention to cause the host vehicle 100 to enter the neighboring lane or the driver's operation to cause the host vehicle 100 to enter the neighboring lane.

Then, when the vehicle driving assistance apparatus 10 detects activation of the turn signal device 31 indicating entry of the host vehicle 100 into the neighboring lane, the vehicle driving assistance apparatus 10 determines that the driver's intention to cause the host vehicle 100 to enter the neighboring lane is detected; and when the vehicle driving assistance apparatus 10 detects operation of the steering wheel 22 indicating entry of the host vehicle 100 into the neighboring lane, the vehicle driving assistance apparatus 10 determines that the driver's operation to cause the host vehicle 100 to enter the neighboring lane is detected.

When the entry condition C4 is satisfied, the vehicle driving assistance apparatus 10 determines "Yes" at the step S630 and proceeds with the process to a step S635 to perform a target vehicle notification. Then, the vehicle driving assistance apparatus 10 proceeds with the process to a step S695 to terminate the process of this routine once.

The target vehicle notification is a notification for informing the driver of the host vehicle 100 that the oncoming vehicle 402 or the adjacent traveling vehicle 403 exists in the neighboring lane which the driver is about to cause the host vehicle 100 to enter. The target vehicle notification is performed by the notification device 40. That is, the target vehicle notification is performed by displaying, by the displaying device 41, an image indicating the presence of the oncoming vehicle 402 or the adjacent traveling vehicle 403 in the neighboring lane which the driver is about to cause the host vehicle 100 to enter, and/or by outputting, by the audio device 42, a sound notifying the presence of the oncoming vehicle 402 or the adjacent traveling vehicle 403 in the neighboring lane which the driver is about to cause the host vehicle 100 to enter.

As described above, the vehicle driving assistance apparatus 10 is configured to perform the target vehicle notification, which is a driving assistance for the host vehicle 100, based on the position information IP on the other vehicle included in the wireless communication information IW transmitted from the other vehicle.

Further, when the target condition C3 is satisfied, i.e., when the inter-vehicle time TTC is equal to or less than the predetermined time and the other vehicle is not detected by the surrounding detection device 50 mounted on the host vehicle 100, or when the inter-vehicle distance D is equal to or less than the predetermined distance and the other vehicle is not detected by the surrounding detection device 50, and the vehicle driving assistance apparatus 10 does not detect the driver's intention to cause the host vehicle 100 to enter the neighboring lane or the driver's operation to cause the host vehicle 100 to enter the neighboring lane, the vehicle driving assistance apparatus 10 performs driving assistance that notifies the driver of the presence of another vehicle in the neighboring lane.

It should be noted that, when the vehicle driving assistance apparatus 10 determines "No" at the step S605, step S610, step S625, or step S630, the vehicle driving assistance apparatus 10 proceeds with the process directly to the step S695 to terminate the process of this routine once.

The above is the operation of the vehicle driving assistance apparatus 10.

According to the vehicle driving assistance apparatus 10, when the inter-vehicle time TTC is longer than the predetermined time (i.e., the predetermined oncoming vehicle inter-vehicle time TTC2 or the predetermined adjacent traveling vehicle inter-vehicle time TTC3), or when the inter-vehicle distance D is longer than the predetermined distance (i.e., the predetermined oncoming vehicle inter-vehicle distance D2 or the predetermined adjacent traveling vehicle inter-vehicle distance D3), even if the driver of the host vehicle 100 attempts to cause the host vehicle 100 to enter the neighboring lane, the target vehicle notification is not performed. That is, even if the driver of the host vehicle 100 causes the host vehicle 100 to enter the neighboring lane, if there is sufficient time margin to avoid contact between the host vehicle 100 and another vehicle (i.e. the oncoming vehicle 402 or the adjacent traveling vehicle 403), the target vehicle notification is not performed.

Also, when the other vehicle is detected by the surrounding detection device 50 and thus the likelihood that the driver of the host vehicle 100 is already aware of the presence of the other vehicle is high, the target vehicle notification is not performed even if the driver of the host vehicle 100 attempts to cause the host vehicle 100 to enter the neighboring lane.

As described above, when there is sufficient time margin to avoid contact between the host vehicle 100 and another vehicle, or when the driver of the host vehicle 100 is already aware of the presence of the other vehicle, the target vehicle notification is not performed. Therefore, unnecessary execution of the target vehicle notification can be suppressed, and as a result, annoyance to the driver of the host vehicle 100 can be reduced. Accordingly, appropriate target vehicle notification regarding other vehicles traveling in the neighboring lane can be provided to the driver of the host vehicle 100.

It should be noted that the present invention is not limited to the aforementioned embodiments, and various modifications can be employed within the scope of the invention.

## Claims

1. A vehicle driving assistance apparatus (10) comprising an electronic control unit (90) configured to perform driving assistance for a host vehicle (100) based on position information of another vehicle (402, 403) included in wireless communication information transmitted from the other vehicle (402, 403),
wherein the electronic control unit (90) is configured to:
acquire, as an inter-vehicle distance, a distance between the host vehicle (100) and the other vehicle (402, 403) existing in a neighboring lane neighboring a lane in which the host vehicle (100) is traveling, based on the position information, or acquire the inter-vehicle distance and acquire, as an inter-vehicle time, a value obtained by dividing the inter-vehicle distance by a relative speed of the host vehicle (100) with respect to the other vehicle (402, 403), based on the position information; and
perform the driving assistance to notify an operator of the host vehicle (100) of the presence of the other vehicle (402, 403) in the neighboring lane when a target condition that the inter-vehicle distance is equal to or less than a predetermined distance or the inter-vehicle time is equal to or less than a predetermined time and the other vehicle (402, 403) is not detected by a surrounding detection device (50) mounted on the host vehicle (100) is satisfied, and when the electronic control unit (90) detects the intention of the operator to cause the host vehicle (100) to enter the neighboring lane or an operation by the operator to cause the host vehicle (100) to enter the neighboring lane.

2. The vehicle driving assistance apparatus (10) according to claim 1, wherein the electronic control unit (90) is configured to perform the driving assistance to notify the operator of the host vehicle (100) of the presence of the other vehicle (402, 403) in the neighboring lane when the target condition that the inter-vehicle time is equal to or less than the predetermined time and the other vehicle (402, 403) is not detected by the surrounding detection device (50) is satisfied, and when the electronic control unit (90) detects the intention of the operator to cause the host vehicle (100) to enter the neighboring lane or the operation by the operator to cause the host vehicle (100) to enter the neighboring lane.

3. The vehicle driving assistance apparatus (10) according to claim 1, wherein the electronic control unit (90) is configured to perform the driving assistance to notify the operator of the host vehicle (100) of the presence of the other vehicle (402, 403) in the neighboring lane when the target condition that the inter-vehicle distance is equal to or less than the predetermined distance and the other vehicle (402, 403) is not detected by the surrounding detection device (50) is satisfied, and when the electronic control unit (90) detects the intention of the operator to cause the host vehicle (100) to enter the neighboring lane or an operation by the operator to cause the host vehicle (100) to enter the neighboring lane.

4. The vehicle driving assistance apparatus (10) according to any one of claims 1 to 3,
wherein the neighboring lane is an oncoming lane neighboring the lane in which the host vehicle (100) is traveling, and
wherein the other vehicle (402, 403) is an oncoming vehicle (402) traveling in the oncoming lane.

5. The vehicle driving assistance apparatus (10) according to any one of claims 1 to 4, wherein the target condition includes a condition that an obstacle is detected in front of the host vehicle (100) in the lane in which the host vehicle (100) is traveling, by the surrounding detection device (50).

6. The vehicle driving assistance apparatus (10) according to any one of claims 1 to 5, wherein the wireless communication information is information transmitted from a wireless communication terminal possessed by a driver riding in the other vehicle (402, 403).

7. The vehicle driving assistance apparatus (10) according to any one of claims 1 to 6,
wherein the electronic control unit (90) is configured to:
determine that it detects the intention of the operator to cause the host vehicle (100) to enter the neighboring lane, when it detects activation of a turn signal device (40) of the host vehicle (100) indicating entry of the host vehicle (100) into the neighboring lane; and
determine that it detects the operation by the operator to cause the host vehicle (100) to enter the neighboring lane, when it detects an operation to a steering wheel (22) of the host vehicle (100) for causing the host vehicle (100) to enter the neighboring lane.
